# EUROPEAN PATENT SPECIFICATION

(11) **EP 1 226 424 B1**
(45) Date of publication and mention of the grant of the patent: **28.09.2005**
(21) Application number: 00943959.7
(22) Date of filing: 01.07.2000
(51) Int. Cl.: G01N 22/00

(54) **AN APPARATUS FOR MEASURING THE UNBURNT RESIDUALS IN COAL ASHES AND A METHOD FOR EMPLOYING THE APPARATUS**
VORRICHTUNG ZUR MESSUNG VON UNVERBRANNTEN RESTEN IN KOHLENASCHE UND VERFAHREN ZU DEREN VERWENDUNG
APPAREIL DE MESURE DE RESIDUS IMBRULES DANS DES CENDRES DE CHARBON ET PROCEDE D'UTILISATION DE CET APPAREIL

(30) Priority: 19.07.1999 IT MI991590
(43) Date of publication of application: 31.07.2002
(73) Proprietor: Enel Produzione S.p.A.-Ricerca, 56122 Pisa (IT)
(72) Inventor: BOTTI, Laura, 56122 Pisa (IT); CELLI RIZIERI, Marco, 56122 Pisa (IT); GRAZIADIO, Mario, 56122 Pisa (IT)
(74) Representative: Ferraiolo, Ruggero
(86) International application number: PCT/EP2000/006150
(87) International publication number: WO 2001/006242

(56) References cited:
- WO-A-91/14936
- DE-A- 19 856 870
- SE-C- 501 473
- US-A- 5 109 201
- US-A- 5 173 662
- US-A- 5 177 444

## Description

The present invention relates to an apparatus for measuring the unburnt residuals in coal ashes and a method for employing the apparatus, more particularly, a microwave apparatus and a method for measuring in real time the quantity of such unburnt residuals present in the ashes produced by coal-fired power stations.

Several measurement methods that employ microwaves for measuring the content of carbon (unburnt coal residuals) present in ash are known from the state of the art, cases in point being those described in U.S. Patent No. 4,705,409, U.S. Patent No. 4,754,214 and U.S. Patent No. 5,109,201. These methods are generally based on measurements of the conductivity of the ash sample and, depending on the particular method, the percentage of unburnt matter may then be obtained from the dielectric constant of the ashes (U.S. Patent No. 4,754,214), the energy absorbed by the sample (U.S. Patent No. 5,109,201) or indirectly from the temperature increase of some substance, water for example, placed along a wave guide (U.S. Patent No. 4,705,409).

Also known are such documents as U.S. Patent No. 5,173,662 and the subsequent U.S. Patent No. 5,369,369, which corresponds to the national application coming from the Australian document No.PCT/AU91/00108.

The apparatus, as described in the Australian patent, comprises two microwave resonant cavities, one of which consisting in a reference chamber, or in alternative, a single resonant cavity may be used and the reference measurement performed when the resonant cavity does not contain the sample. In such apparatus, that employs microwaves for measuring the content of unburnt residuals present in coal ash, the fly ash sample is packed into a non-conducting sample container and placed into the resonant cavity for the measurement, in such a manner that the whole sample size is exposed to the microwaves.

With respect to the technique, the Australian patent method is based on the calculation of characteristic parameters from the resonant peaks (i.e TE and TM modes) and the calculation process involves one of the two peaks, alternatively (TM or TE modes), in turn.

The percentage of unburnt matter is obtained by measuring the attenuation or phase shift of a microwave signal that crosses the ash sample as compared with the reference signal. The percentages of unburnt residuals that can be measured by this method do not exceed 5% and the experimental tests do not yield measurements of a high reproducibility and accuracy.

German patent DE 198.56.870 describes a technique which employs microwaves to measure the quantity of unburnt residuals in coal ash, which also involve the whole sample size exposed to the microwaves

More generally, the known methods are associated with measurement limits that derive from the saturation of the signal absorbed by the sample and the range of validity of the measurements is therefore rather narrow and comprised between 0 and 10%.

In the known methods, furthermore, the measurements depend not only on the percentage of the coal that has not been burnt, but are also strongly dependent on the mineral matrix of the coal and the chemical elements contained in the coal.

None of the existing microwave instrumentation is therefore capable of measuring high percentages of unburnt residuals and this represents a serious limitation when these instruments are applied in recently constructed thermoelectric power stations that employ low-NOₓ combustion systems. These systems produce ashes with high contents of unburnt matter (often between 10 and 30%) as price to be paid for the low nitrogen oxide emissions.

The impossibility of measuring high percentages of unburnt matter with the known instrumentation also represents a serious limitation whenever it is desired to measure the unburnt matter in the heavy boiler-bottom ashes, which always have high contents of unburnt residuals, often in excess of 15%, and this no matter whether the plant in question is old or new.

Furthermore, all the known techniques require the apparatus to be initially calibrated with ashes having a matrix of the same type as that of the sample to be analyzed, and this makes it very difficult to use the instruments in power stations that are not situated in the immediate vicinity of a coal mine and therefore stock coal lots of different origins that, more often than not, become mixed in unknown proportions in the stock yards.

The purpose of the present invention is therefore to provide an apparatus and a method for measuring the unburnt residuals that can readily be used in coal-fired power stations that produce ashes with highly variable contents of such unburnt matter and burn coals from different sources.

The technical problem that the invention sets out to solve is that of making it possible to determine the contents of unburnt matter in heavy ashes over a wide range of concentrations of these residuals and this quite independently of the mineral matrix of the coal employed.

The apparatuses of the invention are defined in claims 1 and 2.

It has been found that if the desired effect is to be maximized, the capacitive antenna must be positioned at roughly half the height of the cylindrical resonance chamber. The said antenna consists of two rectilinear sections. A first section rests on a radius of the circular section of the resonance chamber identified by a plane orthogonal to the longitudinal axis of the resonance chamber and passing through the connector of the antenna. The said first section has a length of the order of half the aforesaid radius. This first section of the antenna is followed by a second section which has a length equal to the first one and forms an angle with respect to the plane of the circular section comprised in the range between 50° and 90°.

For the sake of simplicity of description we shall hereinafter use the term "resonant termination" to designate the assembly consisting of the resonance chamber, the sample-carrier chamber and the capacitive antenna.

The invented method is defined in claim 4.

Still for the sake of simplicity of description we shall hereinafter use the term "representative characteristics" to designate the set of such resonance peak characteristics as the frequency, the amplitude and the half-height width of one or both the resonance peaks.

Furthermore, we shall use the term "slope" to designate the correlation obtained from the variation of the characteristics of the resonance peaks with the corresponding portion of ash exposed to the microwaves; and we shall use the term "linear correlation" to designate the correlation between said slopes, and the percentage of unburnt residuals in the sample.

A first key aspect of the present method is that both the aforesaid resonance peaks (corresponding to the two resonance frequencies TM010 and TE111) are detected, and the characteristics of the resonance peaks, frequency, amplitude and half-height width, are calculated for both the peaks.

A second key aspect of the present is constituted by the fact that, analyzing the resonance signal characteristics of different quantities of the sample, it is possible to obtain measurements covering a wide range of unburnt matter percentages.

A third key aspect of the invention is constituted by the fact that the open capacitive antenna, which is positioned at roughly half the height of the internal side wall of the resonance chamber, consists of two sections that are inclined with respect to each other at a predetermined angle. In fact, a linear relationship between the quantity of ash and the representative characteristics of the two resonance peaks can be obtained only by using an open capacitive antenna with the aforesaid inclination.

In a preferred application of the method, the measurements of the percentage of unburnt residuals are carried out by making use of a linear correlation, obtained by means of statistical methods, of obtained six slope parameters (three for each of the two resonance peaks).

In a reduced application, moreover, it is possible to carry out measurements of the percentage of unburnt matter, by using optionally even only one of the obtained slope parameters. Such an application calls for the prior calibration of the instrument with at least two samples of a known content of unburnt matter, knowledge of this content having previously been obtained, for example, by means of chemical analysis. It will then be possible to correlate any one of the said slopes with at least two of the known percentages of unburnt matter and obtain the so-called calibration straight for the parameter under consideration. The content of unburnt matter of unknown samples having the similar mineral matrix can then be obtained from this calibration straight by means of interpolation measurements.

The advantages offered by the invention as compared with the known techniques consist mainly of the fact that it overcomes the problem of signal saturation associated with percentages of unburnt matter in excess of 10% and therefore makes it possible to determine the percentage of unburnt matter over a wide range of concentrations.

It also provides sufficiently accurate measurements independently of the mineral matrix of the coal from which the sample was obtained even without the prior calibration of the equipment.

The present invention is described in detail by way of examples and with reference to the drawings wherein
Figure 1 is a schematic view,
Figure 2 is a variant of Figure 1,
Figure 3 is a block diagram,
Figure 4 is a resonance spectrum, and
Figures 5 to 14 are graphs of linear correlations.

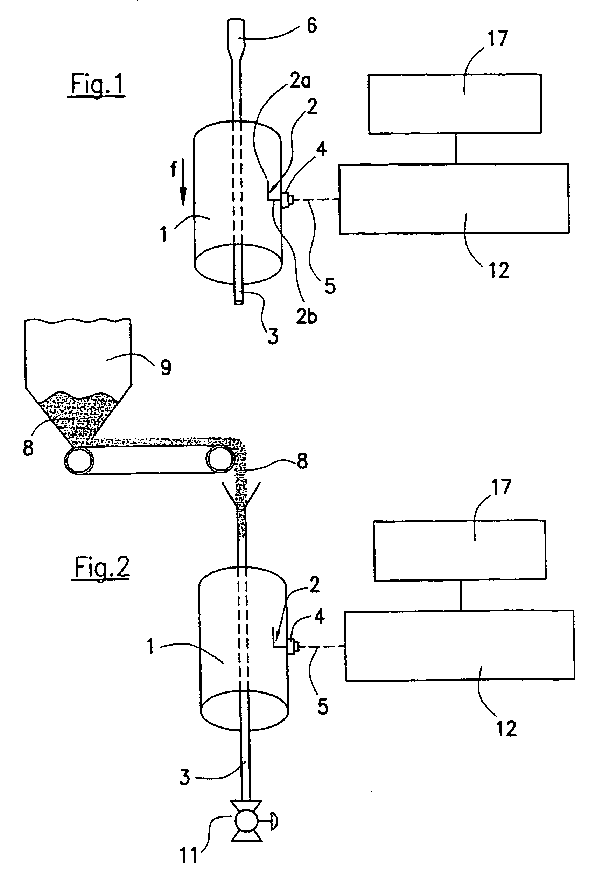

Referring to Figure 1, the resonance chamber (1) can be seen to be cylindrical. The resonant termination consists of the resonance chamber (1), an open capacitive antenna (2), which consists of two rectilinear sections (2a, 2b) arranged at 90° with respect to each other and is situated at half the height of the resonance chamber(1), and a sample-carrier chamber (3) in the form of a quartz tube to accommodate the sample that is to be examined, the quartz being appropriately transparent to the microwaves.

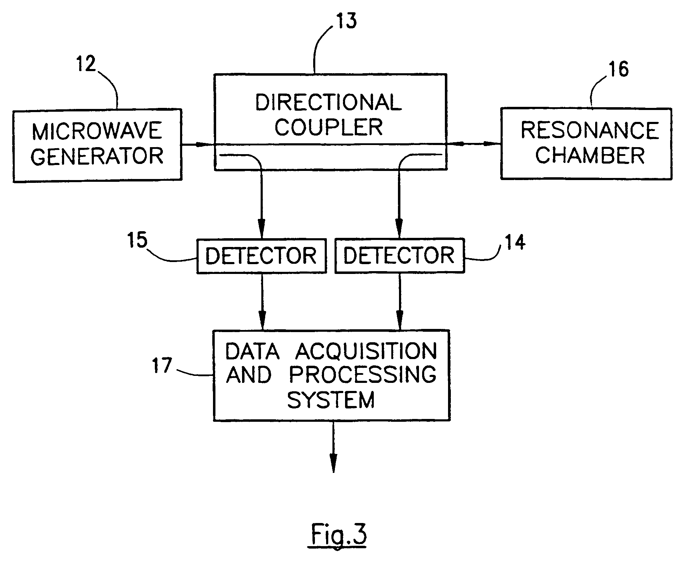

The aforesaid parts are linked by means of a connector (4) and a microwave line (5) to a microwave generator (12) and a data acquisition and processing system (17), the function of which will subsequently be clarified with the help of Figure 3.

The said quartz tube has a closed lower end, while its upper end is connected to a cyclone (6) for capturing the ashes originating from the smoke stack of the boiler. In this particular implementation the sample is gradually loaded into the quartz tube time by time and, while the quantity of ash dropped into the tube varies, the signal reflected by the resonance chamber is detected, possibly compared with a reference signal.

In a possible configuration an analysis of various portions of one and the same sample can be obtained by partially filling the quartz tube (3) with the entire sample and gradually inserting the tube into the resonance chamber (1) or, alternately, in a preferred configuration, by moving the resonance chamber with respect to the quartz tube (3) a little at a time and in the direction of the arrow f, thus exposing successive portions of the ash column to the microwaves. This makes it possible to avoid the rapid saturation of the resonance signal that occurs in the presence of high percentages of unburnt matter.

In said preferred configuration the partially filled quartz tube (3) is fixed, while the resonance chamber (1), to which the antenna (2) is rigidly attached, is displaced longitudinally in such a manner that the microwaves will successively come to strike different portions of the ash column.

Figure 2 illustrates an alternative implementation example in which the sample-carrier chamber (3) has its upper end connected to a dosing device (7) for the ashes (8) consisting of a hopper (9) and a conveyor belt (10) for moving the said ashes (8), while the lower end of the chamber is provided with an on-off valve (11). As compared with the implementation of Figure 1, this implementation makes it possible for the quartz tube (3), which is fixed with respect to the resonance chamber (3), to be loaded with different quantities of ash by means of an appropriate dosing device (7), thus assuring that there will be a continuous passage of the sample across the sample-carrier chamber.

Figure 3 shows the block diagram of the microwave circuit, which basically consists of a variable-frequency microwave generator (12), a directional coupler (13) and two detectors (14, 15) for, respectively, the reflected signal and the reference signal. After having been attenuated, the microwave power is subdivided by means of the directional coupler (13) in such a manner that a part is sent to the reference signal detector (15), while the remaining part reaches the resonance cavity (16). The reflected microwave power is then recorded by the second detector (14) arranged at the free output side of the directional coupler (13). The data acquisition and processing system (17) collects the experimental results obtained from the aforesaid analysis.

The applied frequencies may be varied according to the geometry of the chamber, preferably from 1,500 MHz to 3,500 MHz.

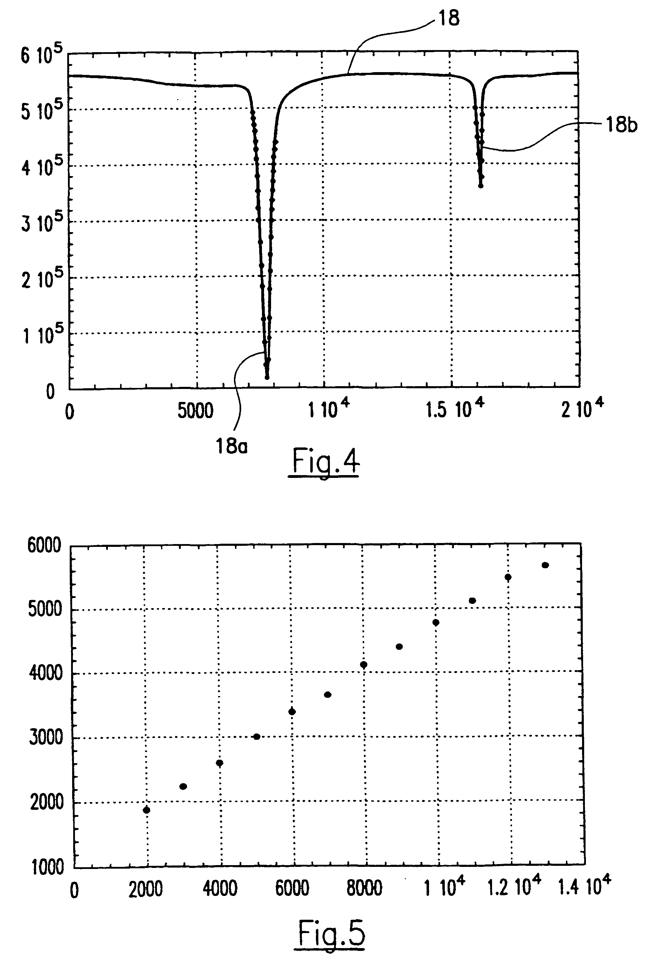

As previously described, the coupling between the microwave line and the resonant termination makes it possible to excite the two aforementioned electromagnetic field distributions TM010 and TE111. Referring to Figure 4, the graph there reproduced shows the resonance spectrum (18) as a function of the excitation frequency, the said spectrum having two resonance peaks (18a, 18b) experimentally obtained in a cylindrical brass cavity that becomes resonant at about 1900 MHz and contains a quartz tube having an internal diameter of 6 mm, this tube being partially filled with ash.

It has been found experimentally that, using an open capacitive antenna situated at about half the height of the cylindrical resonance chamber, the said antenna having a first rectilinear section aligned along a radius of the circular section of the cavity that is defined by a plane orthogonal to the axis of symmetry and passing through the antenna connector, the said first rectilinear section having a length of about half the said radius, and a second rectilinear section, which has the same length as the first section and is positioned in such a manner as to make an angle of between 50° and 90° with respect to the plane of the said circular section, one assures that all the correlations between the representative characteristics associated up with the resonance signal and the quantity of ash present in the said termination will be linear in a convenient range of cell deplacement.

When working with ash samples derived from different coals and containing different percentages of unburnt matter, the linear variation of the said representative characteristics of the resonance signal (frequency, amplitude and half-height width of the resonance peaks) with the ash amount exposed to the microwaves, makes it possible to obtain the slopes of the respective straights for both the distribution modes TM010 and TE111.

Figures 5 to 14 illustrate the linear correlations of the representative characteristics of the resonance signal obtained in a brass cavity as the percentage of carbon was varied.

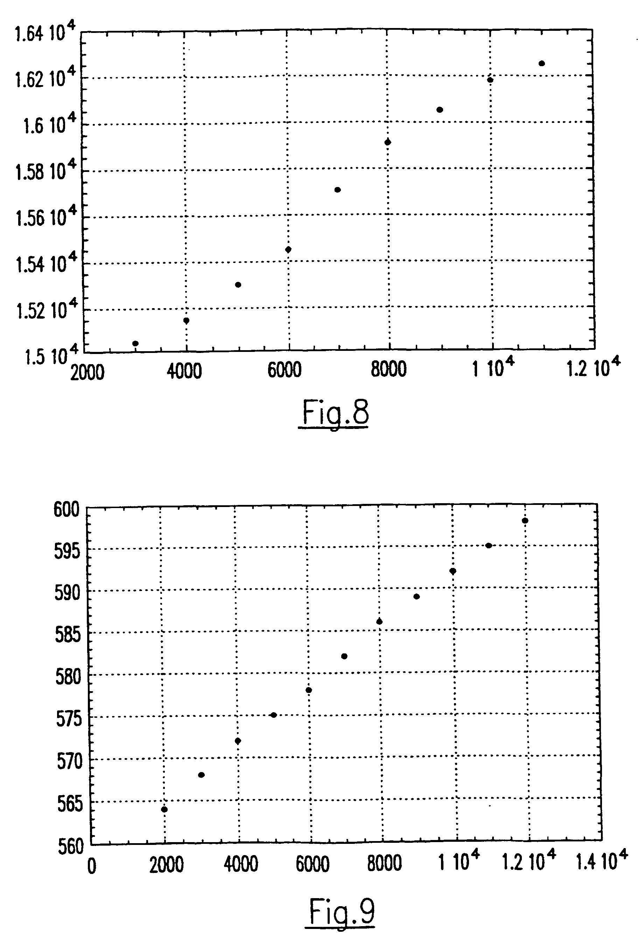

Figures 5 and 8 show the variations of the resonance frequency of respectively TM010 and TE111 modes (ordinate) as a function of the gradually diminishing ash quantity (abscissa) in the absence of unburnt matter.

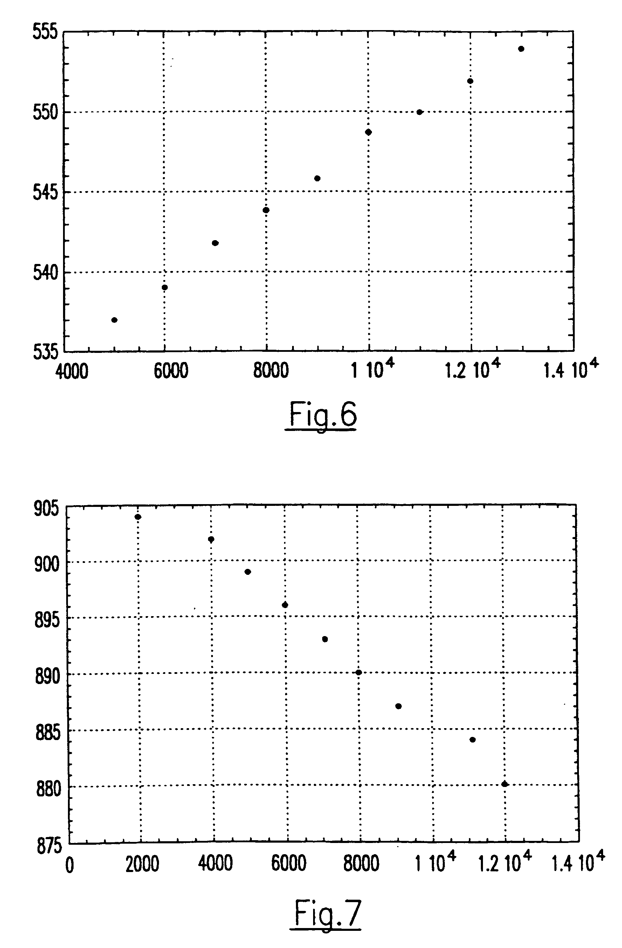

Figures 6 and 9 show the variations of the amplitude of the resonance signal of respectively TM010 and TE111 modes (ordinate) as a function of the gradually diminishing ash quantity (abscissa) in the absence of unburnt matter.

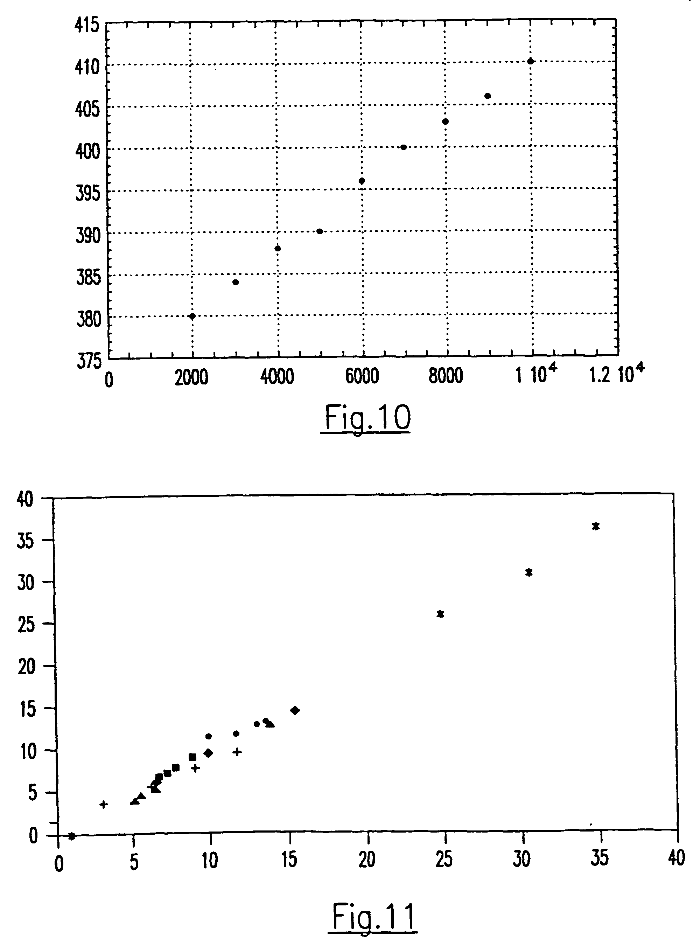

Figures 7 and 10 show the variations of the half-height width of the resonance peaks of respectively TM010 and TE111 modes (ordinate) as a function of the gradually diminishing ash quantity (abscissa) in the absence of unburnt matter.

In a further preferred embodiment, ashes fall from the cyclone 6 into the quartz tube 3 until the upper part of the tube is filled in (as upper part is intended that comprised between the cyclone at the top and a porous filter at the bottom) and the lower part of the tube is empty.

During the tube loading step the resonance chamber is positioned at the bottom, under the filter, and consequently it does not strike any ash portion, but only the empty lower part of the quartz tube. In this position a "blank" measurement of the resonance spectrum is determined.

The real measurement step starts when the chamber is lifted until it strikes a convenient ash portion. By further moving up the chamber step by step, the microwaves strike ash portions little by little so that for each increasing ash portion inside the chamber a resonance spectrum is obtained which is normalized with respect to the blank measurement and from which the concerned parameters are then calculated.

Finally, each parameter is recorded according to the ash quantity (viz. according to the chamber lifting due to the fact that the tube section is constant).

As the relationship between the said recorded parameters and the said chamber lifting is linear, provided the chamber lifting steps are properly selected, the slope of each of said linear relationship can be calculated.

It has been found that this slope shows a good correlation with unburnt residuals of the sample.

Once the measurement are completed, cleaning air is blown from the chamber bottom and, after passing through the empty portion of the tube and the porous filter, the air purges the ashes.

Following appropriate processing with statistical methods, the slopes obtained from the said linear correlations furnish a "linear correlation" that makes it possible to arrive at the unknown percentage of unburnt watter quite independently of the type of coal involved.

Figure 11 shows the variation of the percentages of unburnt matter obtained with the method just described (ordinate) as a function of percentages of unburnt matter obtained by means of chemical analysis (abscissa) when making use of the linear correlation of all the six slope parameters for the two modes TM010 and TM111. The graph shows that there is good agreement between the two types of measurement and that the described method yields the percentage of unburnt matter with an error of the order of 1% (one percent) over the entire range between 0 and 36% (thirty-six percent).

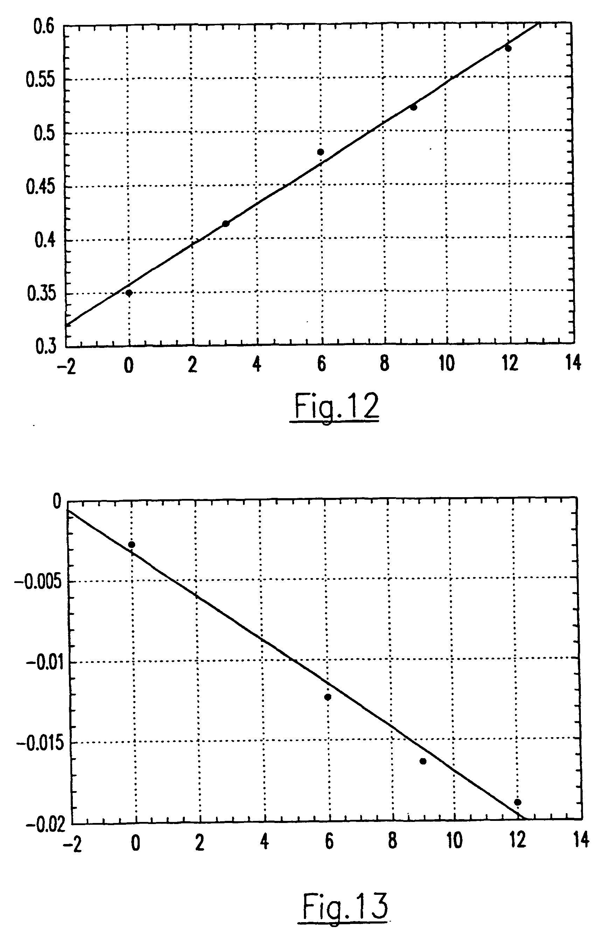

Figure 12 is an example of the reduced application of the method and shows the calibration straight referred to the resonance peak TM010 per unit of mass (ordinate) as a function of the different percentages of carbon (abscissa).

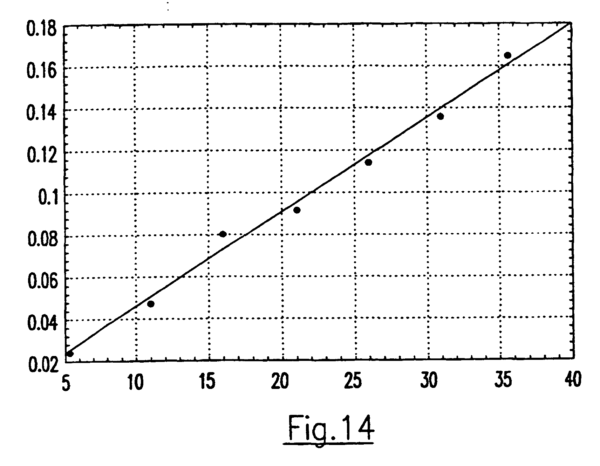

Figure 14 shows that this relationship remains linear for percentages of unburnt carbon up to 36%.

Figure 13 provides another example of the reduced application of the method and shows the calibration straight referred to the half-height width of the resonance peak TM010 per unit of mass (ordinate) as a function of the different percentages of carbon (abscissa). The aforesaid linear correlation can be further optimized by considering, for example, a correlation of the representative characteristics of the resonance peaks that comprises not only the linear terms, but also the mixed and quadratic terms.

## Claims

1. An apparatus for measuring the unburnt residuals in coal ashes (8) consisting of a microwave resonance chamber (1) in which there is situated an ash sample-carrier chamber (3) not absorbing microwaves, a variable-frequency microwave generator (12) and a data acquisition system (17), where the resonance chamber (1) contains a capacitive antenna (2) connected by means of a connector (4) and a microwave line (5) to the microwave generator (12), such that, varying the excitation frequency applied to the resonance chamber (1), a resonance spectrum is obtained showing two minima (resonance peaks) corresponding to two distinct central resonance frequencies, namely TM010 and TE111 modes;
**characterized in that** the apparatus is provided with means for setting the cylindrical resonance chamber (1) and the ash sample-carrier chamber (3) in a longitudinal motion relative to each other so that for varying ash quantities inside the resonance chamber the resonance spectrum can be obtained, the sample carrier chamber (3) is made of quartz, likewise cylindrical and coaxial with the resonance chamber and the capacitive antenna is situated at about half the height of the cylindrical resonance chamber, said antenna being an open antenna consisting of two rectilinear sections (2a, 2b), the first of which is fixed to the connector (4) and lies in a plane orthogonal to the longitudinal axis of the resonance chamber (1), the second of which has the same length as the first section and is positioned in such a manner as to form an angle between 50° and 90° with respect to said orthogonal plane, said features causing the variation of one or more characteristics of the resonance peaks, the frequency, the amplitude and the half-height width of one or both the resonance peaks, with respect to the quantity of ash present in the sample-carrier chamber (3), being correlated with the content of unburnt matter in the ash sample-carrier chamber (3).

2. An apparatus for measuring the unburnt residuals in coal ashes (8) consisting of a microwave resonance chamber (1) in which there is situated an ash sample-carrier chamber (3) not absorbing microwaves, a variable-frequency microwave generator (12) and a data acquisition system (17), where the resonance chamber (1) contains a capacitive antenna (2) connected by means of a connector (4) and a microwave line (5) to the microwave generator (12), the resonance chamber (1) and the ash sample-carrier chamber (3) being fixed one with respect to the other, such that, varying the excitation frequency applied to the resonance chamber (1), a resonance spectrum is obtained showing two minima (resonance peaks) corresponding to two distinct central resonance frequencies, namely TM010 and TE111 modes;
**characterized in that** the apparatus is provided with means for gradually loading the ash sample-carrier chamber with the ash sample so that while the quantity of ash loaded into the sample carrier varies, the resonance spectrum can be obtained, the sample carrier chamber (3) is made of quartz, cylindrical and coaxial with the resonance chamber and the capacitive antenna is situated at about half the height of the likewise cylindrical resonance chamber, said antenna being an open antenna consisting of two rectilinear sections (2a, 2b), the first of which is fixed to the connector (4) and lies in a plane orthogonal to the longitudinal axis of the resonance chamber (1), the second of which has the same length as the first section and is positioned in such a manner as to form an angle between 50° and 90° with respect to said orthogonal plane, said features causing the variation of one or more characteristics of the resonance peaks, the frequency, the amplitude and the half-height width of one or both the resonance peaks, with respect to the quantity of ash present in the sample-carrier chamber (3), being correlated with the content of unburnt matter in the ash sample-carrier chamber (3).

3. An apparatus in accordance with claims 1 and 2 **characterized in that** the first rectilinear section of the open capacitive antenna (2) has a length substantially equal to one quarter of the chamber width.

4. A method for determining the quantity of unburnt matter in coal ash by means of the use of the apparatus in accordance with claims 1 to 3 and consisting of the following phases:
- using the microwave generator (12) to excite the two electromagnetic field distributions TM010 mode and TE111 mode, of which the first attains its maximum along the axis on which the ash sample is situated, while the second attains its maximum in a plane orthogonal to the axis and situated at roughly half the height of the resonance chamber;
- acquiring the resonance spectrum (18) by recording the behaviour of the resonance signal as the excitation frequency varies, the said resonance spectrum (18) providing two resonance peaks (18a, 18b) corresponding to the two distinct excitation frequencies of modes TM010, TE111,
said method comprising further that successive quantities of the ash sample are gradually exposed to the microwaves, the characteristics of the resonance peaks (18a, 18b), the frequency, the amplitude and the half-height width of one or both the resonance peaks, being calculated with respect to each of the different quantities of one and the same ash sample;
- correlating the variation of one or more of said characteristics of one or both the resonance peaks (18a, 18b), with the different quantities of ash exposed to the microwaves;
- calculate the slope parameters from the above said correlations;
- defining a linear correlation between said slope parameters and the content of unburnt residuals in ash samples of different coals previously measured by chemical analysis;
- determining the quantity of unburnt residuals present in unknown ash samples on the basis of said linear correlation.

5. A method in accordance with claim 4, **characterized in that** either all the slopes parameters, or some of them, may be used to determine the content of unburnt matter.

6. A method in accordance with claim 4, **characterized in that** only one of the slopes parameters may be used to determine the content of unburnt matter.

## Patentansprüche

1. Vorrichtung zum Messen der unverbrannten Reste in Kohlenaschen (8), die aus einer Mikrowellenresonanzkammer (1), in der eine Aschenprobe-Trägerkammer (3) angeordnet ist, die Mikrowellen nicht absorbiert, einem Mikrowellengenerator (12) variabler Frequenz und einem Datenerfassungssystem (17) besteht, wobei die Resonanzkammer (1) eine kapazitive Antenne (2) enthält, die mit Hilfe eines Verbinders (4) und einer Mikrowellenleitung (5) mit dem Mikrowellengenerator (12) verbunden ist, so dass durch Verändern der Anregungsfrequenz, die an die Resonanzkammer (1) angelegt wird, ein Resonanzspektrum erhalten wird, das zwei Minima (Resonanzspitzen) zeigt, die den beiden unterschiedlichen Mittelresonanzfrequenzen entsprechen, nämlich TM010 und TE111-Moden;
**dadurch gekennzeichnet, dass** die Vorrichtung mit Mitteln zum Versetzen der zylindrischen Resonanzkammer (1) und der Aschenproben-Trägerkammer (3) in eine Längsbewegung relativ zueinander, so dass für variierende Aschenmengen innerhalb der Resonanzkammer das Resonanzspektrum erhalten werden kann, dass die Proben-Trägerkammer (3) aus Quarz, ebenso zylindrisch und koaxial mit der Resonanzkammer ausgebildet ist und die kapazitive Antenne in ungefähr der halben Höhe der zylindrischen Resonanzkammer angeordnet ist, welche Antenne eine offene Antenne ist, die aus zwei geradlinigen Abschnitten (2a, 2b) besteht, von denen der erste am Verbinder (4) befestigt ist und in einer Ebene orthogonal zur Längsachse der Resonanzkammer (1) liegt, von denen der zweite dieselbe Länge wie der erste Abschnitt hat und auf solche Weise positioniert ist, dass er einen Winkel von zwischen 50° und 90° in Bezug auf die orthogonale Ebene bildet, welche Merkmale die Veränderung von einer oder mehreren Charakteristiken der Resonanzspitzen bewirken, der Frequenz, der Amplitude und der Halbhöhenbreite von einem oder beiden Resonanzspitzen in Bezug auf die Aschenmenge in der Proben-Trägerkammer (3), die mit dem Gehalt an nicht verbranntem Material in der Aschenproben-Trägerkammer (3) korreliert ist.

2. Vorrichtung zum Messen der unverbrannten Reste in Kohlenaschen (8), die aus einer Mikrowellenresonanzkammer (1), in der eine Aschenproben-Trägerkammer (3) angeordnet ist, die keine Mikrowellen absorbiert, einem Mikrowellengenerator (12) mit variabler Frequenz und einem Datenerfassungssystem (17) besteht, wobei die Resonanzkammer (1) eine kapazitive Antenne (2) enthält, die mit Hilfe eines Verbinders (4) und einer Mikrowellenleitung (5) mit dem Mikrowellengenerator (12) verbunden ist, wobei die Resonanzkammer (1) und die Aschenproben-Trägerkammer (3) in Bezug aufeinander fest angeordnet sind, so dass bei Variieren der Anregungsfrequenz, die an die Resonanzkammer (1) angelegt wird, ein Resonanzspektrum erhalten wird, das zwei Minima (Resonanzspitzen) zeigt, die zwei getrennten Mittelresonanzfrequenzen entsprechen, nämlich TM010 und TE111-Moden;
**dadurch gekennzeichnet, dass** die Vorrichtung mit Mitteln zum allmählichen Beladen der Aschenproben-Trägerkammer mit der Aschprobe versehen ist, so dass, während die Menge von Asche, die in den Probenträger geladen wird, sich ändert, das Resonanzspektrum erhalten werden kann, dass die Proben-Trägerkammer (3) aus Quarz hergestellt ist, zylindrisch und koaxial mit der Resonanzkammer ist und die kapazitive Antenne in ungefähr der halben Höhe der ebenfalls zylindrischen Resonanzkammer angeordnet ist, welche Antenne eine offene Antenne ist, die aus zwei geradlinigen Abschnitten (2a, 2b) besteht, von denen der erste am Verbinder (4) befestigt ist und in einer Ebene orthogonal zur Längsachse der Resonanzkammer (1) liegt, von denen der zweite die selbe Länge wie der erste Abschnitt hat und auf solche Weise positioniert ist, dass er einen Winkel zwischen 50° und 90° in Bezug auf die orthogonale Ebene bildet, welche Merkmale die Veränderung von einem oder mehreren Charakteristiken der Resonanzspitzen bewirken, der Frequenz, der Amplitude und der Halbhöhenbreite von einer oder beiden Resonanzspitzen, in Bezug auf die Menge von Asche, die in der Proben-Trägerkammer (3) vorhanden ist, die mit dem Gehalt an unverbranntem Material in der Aschenproben-Trägerkammer (3) korreliert ist.

3. Vorrichtung nach Anspruch 1 und 2, **dadurch gekennzeichnet, dass** der erste geradlinige Abschnitt der offenen kapazitiven Antenne (2) eine Länge hat, die im Wesentlichen gleich einem Viertel der Kammerbreite ist.

4. Verfahren zum Bestimmen der Menge von unverbranntem Materialien Kohlenasche mit Hilfe der Verwendung der Vorrichtung nach den Ansprüchen 1 bis 3, das aus den folgenden Phasen besteht:
- Verwenden des Mikrowellengenerators (12), um die zwei elektromagnetischen Feldverteilungen TM010-Mode und TE111-Mode anzuregen, von denen der erste sein Maximum entlang der Achse erreicht, auf der die Aschenprobe angeordnet ist, während der zweite sein Maximum in einer Ebene erreicht, die orthogonal zur Achse ist und in ungefähr der halben Höhe der Resonanzkammer angeordnet ist;
- das Resonanzspektrum (18) durch Aufzeichnen des Verhaltens des Resonanzsignals zu erfassen, während sich die Anregungsfrequenz verändert, wobei das Resonanzspektrum (18) zwei Resonanzspitzen (18a, 18b) liefert, die den beiden getrennten Anregungsfrequenzen von Moden TM010, TE111 entsprechen, welches Verfahren es weiter aufweist, dass aufeinander folgende Mengen der Aschenprobe allmählich den Mikrowellen ausgesetzt werden, wobei die Charakteristiken der Resonanzspitzen (18a, 18b), die Frequenz, die Amplitude und die Halbhöhenbreite von einem oder beiden Resonanzspitzen in Bezug auf jede der unterschiedlichen Mengen von einer und derselben Aschenprobe berechnet werden;
- die Variation von einer oder mehrerer der Charakteristiken der einen oder der beiden Resonanzspitzen (18a, 18b) mit den unterschiedlichen Aschenmengen zu korrelieren, die den Mikrowellen ausgesetzt sind;
- die Steigungsparameter aus den obigen Korrelationen zu berechnen;
- eine lineare Korrelation zwischen den Steigungsparametern und dem Inhalt von unverbrannten Resten in Aschenproben von unterschiedlichen Kohlen zu definieren, die vorher durch chemische Analyse gemessen wurden;
- die Menge von unverbrannten Resten, die in unbekannten Aschenproben vorhanden sind, aufgrund der linearen Korrelation zu bestimmen.

5. Verfahren nach Anspruch 4, **dadurch gekennzeichnet, dass** entweder alle Steigungsparameter oder einige von ihnen benutzt werden können, den Gehalt an unverbranntem Material zu bestimmen.

6. Verfahren nach Anspruch 4, **dadurch gekennzeichnet, dass** nur einer der Steigungsparameter benutzt werden kann, um den Gehalt an unverbranntem Material zu bestimmen.

## Revendications

1. Appareil destiné à mesurer les résidus imbrûlés dans des cendres de charbon (8), se composant d'une chambre de résonance de micro-ondes (1) dans laquelle se trouve une chambre porteuse et d'échantillonnage de cendres (3) n'absorbant pas les micro-ondes, d'un générateur de micro-ondes à fréquence variable (12) et d'un système d'acquisition de données (17), la chambre de résonance (1) contenant une antenne capacitive (2) reliée à l'aide d'un connecteur (4) et d'une ligne à micro-ondes (5) au générateur de micro-ondes (12), de manière à obtenir en faisant varier la fréquence d'excitation appliquée à la chambre de résonance (1), un spectre de résonance présentant deux minima (pics de résonance) correspondant à deux fréquences de résonance centrales distinctes, à savoir les modes TM010 et TE111,
**caractérisé en ce que**
l'appareil est doté d'un moyen destiné à placer la chambre de résonance cylindrique (1) et la chambre porteuse et d'échantillonnage de cendres (3) dans un mouvement longitudinal l'une par rapport à l'autre de manière à obtenir le spectre de résonance en faisant varier des quantités de cendres à l'intérieur de la chambre de résonance, la chambre porteuse et d'échantillonnage (3) est composée de quartz, est également cylindrique et coaxiale par rapport à la chambre de résonance, et l'antenne capacitive est située à mi-hauteur environ de la chambre de résonance cylindrique, l'antenne étant une antenne ouverte constituée de deux sections rectilignes (2a, 2b), la première étant fixée au connecteur (4) et reposant dans un plan orthogonal à l'axe longitudinal de la chambre de résonance (1), la seconde ayant la même longueur que la première section et étant positionnée de manière à former un angle compris entre 50° et 90° par rapport au plan orthogonal, les propriétés entraînant la variation d'une ou de plusieurs caractéristiques parmi les pics de résonance, la fréquence, l'amplitude et la largeur à mi-hauteur de l'un ou des deux pics, par rapport à la quantité de cendres présentes dans la chambre porteuse et d'échantillonnage (3), en corrélation avec la teneur en matières imbrûlées dans la chambre porteuse et d'échantillonnage (3).

2. Appareil destiné à mesurer les résidus imbrûlés dans des cendres de charbon (8), se composant d'une chambre de résonance à micro-ondes (1) dans laquelle se trouve une chambre porteuse et d'échantillonnage de cendres (3) n'absorbant pas les micro-ondes, d'un générateur de micro-ondes à fréquence variable (12) et d'un système d'acquisition de données (17), la chambre de résonance (1) contenant une antenne capacitive (2) reliée à l'aide d'un connecteur (4) et d'une ligne à micro-ondes (5) au générateur de micro-ondes (12), la chambre de résonance (1) et la chambre porteuse et d'échantillonnage de cendres (3) étant fixées l'une par rapport à l'autre de manière à obtenir, en faisant varier la fréquence d'excitation appliquée à la chambre de résonance (1), un spectre de résonance présentant deux minima (pics de résonance) correspondant à deux fréquences de résonance centrales distinctes, à savoir les modes TM010 et TE111,
**caractérisé en ce que**
l'appareil est doté d'un moyen destiné à charger progressivement la chambre porteuse et d'échantillonnage de cendres de l'échantillon de cendres de sorte que, lorsque la quantité de cendres chargées dans la chambre porteuse et d'échantillonnage varie, le spectre de résonance puisse être obtenu, la chambre porteuse et d'échantillonnage (3) est composée de quartz, est cylindrique et coaxiale par rapport à la chambre de résonance et l'antenne capacitive est située à mi-hauteur environ de la chambre de résonance également cylindrique, l'antenne étant une antenne ouverte constituée de deux sections rectilignes (2a, 2b), la première étant fixée au connecteur (4) et reposant dans un plan orthogonal à l'axe longitudinal de la chambre de résonance (1), la seconde ayant la même longueur que la première section et étant positionnée de manière à former un angle compris entre 50° et 90° par rapport au plan orthogonal, les propriétés entraînant la variation d'une ou de plusieurs caractéristiques parmi les pics de résonance, la fréquence, l'amplitude et la largeur à mi-hauteur de l'un ou des deux pics, par rapport à la quantité de cendres présentes dans la chambre porteuse et d'échantillonnage (3), en corrélation avec la teneur en matières imbrûlées dans la chambre porteuse et d'échantillonnage (3).

3. Appareil selon les revendications 1 et 2,
**caractérisé en ce que**
la première section rectiligne de l'antenne capacitive ouverte (2) a une longueur sensiblement égale à un quart de la largeur de chambre.

4. Procédé destiné à déterminer de la quantité de matières imbrûlées dans des cendres de charbon à l'aide de l'utilisation de l'appareil selon les revendications 1 à 3 et constitué des étapes suivantes :
- utilisation du générateur de micro-ondes (12) pour exciter les deux distributions de champ électromagnétique, mode TM010 et mode TE111, le premier atteignant son maximum le long de l'axe sur lequel se trouve l'échantillon de cendres, tandis que le second atteint son maximum dans un plan orthogonal à l'axe en étant situé à peu près à mi-hauteur de la chambre de résonance,
- acquisition du spectre de résonance (18) en enregistrant le comportement du signal de résonance lorsque la fréquence d'excitation varie, le spectre de résonance (18) fournissant deux pics de résonance (18a, 18b) correspondant aux deux fréquences d'excitation distinctes des modes TM 010 et TE111,
- le procédé comprenant en outre le fait que des quantités successives de l'échantillon de cendres sont progressivement exposées aux micro-ondes, les caractéristiques des pics de résonance (18a, 18b), de la fréquence, de l'amplitude et de la largeur à mi-hauteur de l'un ou des deux pics de résonance, étant calculées par rapport à chacune des différentes quantités d'un seul et même échantillon de cendres,
- corrélation de la variation de l'une ou de plusieurs des caractéristiques de l'un ou des deux pics de résonance (18a, 18b) avec les quantités différentes de cendres exposées aux micro-ondes,
- calcul des paramètres d'inclinaison à partir des corrélations ci-dessus ;
- définition d'une corrélation linéaire entre les paramètres d'inclinaison et la teneur en résidus imbrûlés dans des échantillons de cendres de différents charbons mesurés auparavant par une analyse chimique,
- détermination de la quantité de résidus imbrûlés présents dans des échantillons de cendres inconnus sur la base de la corrélation linéaire.

5. Procédé selon la revendication 4,
**caractérisé en ce que**
tous les paramètres de pente, ou certains d'entre eux, peuvent être utilisés pour déterminer la teneur en matières imbrûlées.

6. Procédé selon la revendication 4,
**caractérisé en ce que**
seul un des paramètres de pente peut être utilisé pour déterminer la teneur en matières imbrûlées.
